(19) Europäisches Patentamt
European Patent Office
Office européen des brevets

(11) Veröffentlichungsnummer: **0 258 460**
**A1**

(12)

# EUROPÄISCHE PATENTANMELDUNG

Veröffentlicht nach Art. 158 Abs. 3 EPÜ

(21) Anmeldenummer: 87901770.5

(51) Int. Cl.³: G 11 B 7/00

(22) Anmeldetag: 05.02.87

Daten der zugrundeliegenden internationalen Anmeldung:

(86) Internationale Anmeldenummer:
PCT/SU87/00018

(87) Internationale Veröffentlichungsnummer:
WO87/04841 (13.08.87 87/18)

(30) Priorität: 07.02.86 SU 3134135

(43) Veröffentlichungstag der Anmeldung:
09.03.88 Patentblatt 88/10

(84) Benannte Vertragsstaaten:
AT CH DE FR GB IT LI LU NL SE

(71) Anmelder: INSTITUT PROBLEM MODELIROVANIA V ENERGETIKE AKADEMII NAUK UKRAINSKOI SSR
pr. Pobedy, 56
Kiev, 252680(SU)

(72) Erfinder: PETROV, Vyacheslav Vasilievich
ul. Montazhnikov, 104
Kiev, 252069(SU)

(72) Erfinder: GRINKO, Dmitry Alexandrovich
ul. Akademika Dobrokhotova, 4-71
Kiev, 252142(SU)

(72) Erfinder: ANTONOV, Alexandr Alexandrovich
pr. Vernadskogo, 85-64
Kiev, 252142(SU)

(72) Erfinder: KRJUCHIN, Andrei Andreevich
ul. Juliusa Fuchika, 8-13
Kiev, 252049(SU)

(72) Erfinder: ATAMAS, Valentina Alexeevna
ul. Bakinskaya, 37-219
Kiev, 252086(SU)

(72) Erfinder: GRINKO, Alexandr Maximovich
ul. Kurskaya, 8-13
Kiev, 252049(SU)

(74) Vertreter: Eitle, Werner, Dipl.-Ing. et al,
Hoffmann, Eitle & Partner Patentanwälte Arabellastrasse 4
D-8000 München 81(DE)

## (54) METHODE UND OPTISCHE SPEICHERVORRICHTUNG ZUR INFORMATIONSAUFZEICHNUNG UND ZUM INFORMATIONSLÖSCHEN AUF EINEM OPTISCHEN TRÄGER.

(57) Informationsaufzeichnungs- und Löschverfahren für einen optischen Informationsträger besteht darin, daß der optische Informationsträger (1) mit einer eine wirksame Innenfläche (3) mit einem Aufzeichnungsmedium (4) und eine zusätzliche Innenfläche (5) aufweisenden hermetisch abgedichteten Kammer (2) zum Einsatz gelangt, in die hermetisch abgedichtete Kammer (2) ein aktiver, gegenüber dem Stoff des Aufzeichnungsmediums (4) eine chemische Auffinität aufweisender Stoff eingeführt, die Erzeugung und Eliminierung mindestens einer Informationseinheit durch Entfernung und/oder Auftragung einer Schicht des Aufzeichnungsmediums (4) durch eine energetische Einwirkung auf das Aufzeichnungsmedium (4) vorgenommen werden. Die Entfernung und Auftragung der Schicht des Aufzeichnungsmediums (4) erfolgen auf dem Wege der Durchführung chemischer Reaktionen unter Beteiligung des Stoffes des Aufzeichnungsmediums (4) und des aktiven, gegenüber dem Stoff des Aufzeichnungsmediums (4) eine chemische Affinität aufweisenden Stoffes (6).

Der optische Speicher zur Informationsaufzeichnung und -löschung auf einem optischen Informationsträger enthält eine Strahlungsquelle (7), die auf den optischen Informationsträger (1) mit der hermetisch abgedichteten Kammer (2) einwirkt, die eine wirksame Innenfläche (3) mit

./...

EP 0 258 460 A1

einem Aufzeichnungsmedium (4) und eine wirksame Innenfläche (5) aufweist, die mit einem Erhitzer (11) in Wärmekontakt stehen. Die hermetisch abgedichtete Kammer (2) besitzt einen aktiven, gegenüber dem Stoff des Aufzeichnungsmediums (4) eine chemische Affinität aufweisenden Stoff (6).

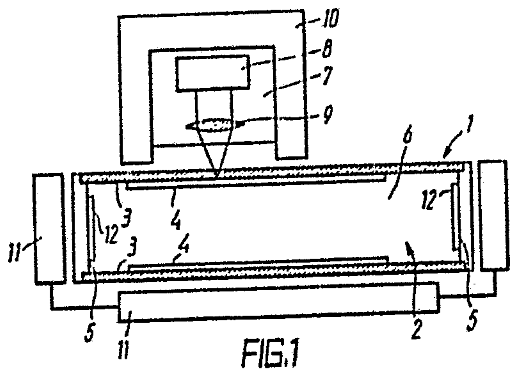

FIG.1

# INFORMATIONSAUFZEICHNUNGS-UND LÖSCHVERFAHREN FÜR EINEN OPTISCHEN INFORMATIONSTRÄGER UND OPTISCHER SPEICHER ZUR DURCHFÜHRUNG DIESES VERFAHRENS

## Gebiet der Technik

Die Erfindung betrifft die Informationsaufzeichnung und -löschung, die auf der relativen Verschiebung eines optischen Informationsträgers und einer Quelle energetischer Einwirkung gegeneinander beruhen, und bezieht sich insbesondere auf ein Informationsaufzeichnungs- und Löschverfahren für einen optischen Informationsträger und auf einen optischen Speicher für die Durchführung dieses Verfahrens.

## Bisheriger Stand der Technik

Die Erfindung ist der Lösung eines der Hauptprobleme der Aufzeichnung und Speicherung einer Digitalinformation mit Hilfe optischer Speicher, der Organisierung der Vorgänge der Löschung und einer wiederholten Aufzeichnung der Information gewidmet. Die zur Zeit bestehenden Methoden zur Durchführung einer reversiblen Aufzeichnung, die von magnetooptischen und Gefügeumwandlungen in Aufzeichnungsmedien auf der Basis von Chalkogenidglas Gebrauch machen, sind sehr kompliziert in der Realisierung.

Es ist ein Informationsaufzeichnungs- und Löschverfahren für einen optischen Informationsträger (U.Djuli "Lazernaya tekhnologiya i analiz materialov" (Lasertechnologie und Werkstoffanalyse), 1986, Verlag "Mir", Moskau, S. 192 bis 195) bekannt, das bei relativer Verschiebung eines optischen Informationsträgers und einer Strahlungsquelle zueinander durchgeführt wird, die eine energetische Einwirkung auf das Aufzeichnungsmedium des optischen Informationsträgers zur Erzeugung einer Folge von Aufzeichnungsinformationseinheiten und zur Informationslöschung ausübt, darin bestehend, daß die Erzeugung

mindestens einer Informationseinheit aus der Folge der Aufzeichnungsinformationseinheiten durch Entfernung oder Auftragung einer Aufzeichnungsschicht des optischen Informationsträgers durch eine energetische Einwirkung auf dieses Aufzeichnungsmedium und die Eliminierung mindestens einer Informationseinheit aus der Folge der Aufzeichnungsinformationseinheiten durch Entfernung und/oder Auftragung einer Aufzeichnungsschicht auch unter einer energetischen Einwirkung auf das Aufzeichnungsmedium vorgenommen wird, wobei die Entfernung oder Auftragung der Aufzeichnungsschicht des optischen Informationsträgers durch Durchführung chemischer Reaktionen unter Beteiligung des Stoffes der Aufzeichnungsschicht und eines aktiven Stoffes realisiert werden, der eine chemische Affinität gegenüber dem Stoff des Aufzeichnungsmediums hat.

In bekannten Verfahren kann die Erzeugung mindestens einer Informationseinheit durch Auftragung einer Aufzeichnungsschicht des optischen Informationsträgers durch eine energetische Einwirkung auf das Aufzeichnungsmedium und die Eliminierung mindestens einer Informationseinheit durch Entfernung einer Aufzeichnungsschicht des optischen Informationsträgers auch unter einer energetischen Einwirkung auf das Aufzeichnungsmedium erreicht werden.

Bei der Informationsaufzeichnung werden die Gasphasenprodukte einer chemischen Wechselwirkung des Stoffes des Aufzeichnungsmediums mit dem aktiven, eine chemische Affinität gegenüber dem Stoff des Aufzeichnungsmediums aufweisenden Stoff aus dem Aufzeichnungsbereich entfernt und im weiteren für die Lösch- und/oder Aufzeichnungsvorgänge nicht benutzt. Bei der Informationslöschung werden die Gasphasenprodukte der chemischen Wechselwirkung des Stoffes des Aufzeichnungsmediums mit dem aktiven, eine chemische Affinität gegenüber dem Stoff des Aufzeichnungsmediums aufweisenden Stoff in den Löschbereich geleitet, worauf die Reaktionsprodukte aus dem Löschbereich weggetragen und im weiteren für die Informa-

tionsaufzeichnungs- und/oder Informationslöschvorgänge nicht verwendet werden. Infolgedessen sind sowohl die Informationsaufzeichnungs- als auch die Informationslöschvorgänge irreversibel, weshalb sich die Aufzeichnungs- und/oder Löschvorgänge in einem geschlossenen System des Informationsträgers nicht realisiert lassen.

Es ist ein optischer Speicher zur Informationsaufzeichnung und -löschung auf einem optischen Informationsträger (U.Djuli "Lazernaya tekhnologia i analiz materialov", 1986, Verlag "Mir", Moskau, S.192 bis 195) bekannt, der einen optischen Informationsträger mit einem Aufzeichnungsmedium, eine Strahlungsquelle zur Erhitzung des optischen Informationsträgers durch Bestrahlung, einen aktiven Stoff, der eine chemische Affinität gegenüber dem Stoff des Aufzeichnungsmediums aufweist, eine mit dem optischen Informationsträger und der Strahlungsquelle verbundene Adressierungseinheit für Informationseinheiten, die eine kontrollierbare relative Verschiebung des Aufzeichnungsmediums des optischen Informationsträgers und der Strahlungsquelle gegeneinander verwirklicht, hintereinander angeordnete Quellen für ein Trägergas und für einen aktiven, eine chemische Affinität gegenüber dem Stoff des Aufzeichnungsmediums aufweisenden Stoff mit dessen Erhitzer enthält, die mit einer Kammer verbunden ist, in der der optische Informationsträger untergebracht ist. Der gegenüber dem Stoff des Aufzeichnungsmediums eine chemische Affinität aufweisende aktive Stoff wird durch das Trägergas von der Quelle für einen chemisch aktiven Stoff zur Kammer mit dem optischen Informationsträger und weiter zum Auspuff aus dieser Kammer übertragen.

Der bekannte optische Speicher wird dadurch gekennzeichnet, daß die Produkte der chemischen Wechselwirkung des Aufzeichnungsmediums des optischen Speichers mit dem aktiven, gegenüber dem Stoff des Aufzeichnungsmediums eine chemische Affinität aufweisenden Stoff aus diesem Speicher herausgeleitet werden, weshalb sich eine chemi-

sche Regenerierung von Abschnitten des Aufzeichnungsmediums des optischen Informationsträgers in einem geschlossenen System des optischen Informationsträgers in einem geschlossenen System des optischen Informationsträgers nicht durchführen läßt und neue Quellen für einen aktiven, gegenüber dem Stoff des Aufzeichnungsmediums eine chemische Affinität aufweisenden Stoff und für ein Trägergas erforderlich werden.

## Offenbarung der Erfindung

Der Erfindung liegt die Aufgabe zugrunde, ein derartiges Informationsaufzeichnungs- und Löschverfahren für einen optischen Informationsträger und einen derartigen optischen Speicher für die Durchführung dieses Verfahrens zu schaffen, die es gestatten, eine mehrfache chemische Regenerierung von Abschnitten des Aufzeichnungsmediums des optischen Informationsträgers in Informationsaufzeichnungs- und Informationslöschvorgängen in einem geschlossenen System des optischen Informationsträgers durchzuführen, was eine Vergrößerung der Zykluszahl bei der Informationsüberschreibung und eine Erhöhung der Zuverlässigkeit der Systeme zur Informationsaufzeichnung und -speicherung gewährleistet.

Die Aufgabe wird dadurch gelöst, daß in dem Informationsaufzeichnungs- und Löschverfahren für einen optischen Informationsträger, das bei einer relativen Verschiebung des optischen Informationsträgers und einer Strahlungsquelle zueinander durchgeführt wird, die eine energetische Einwirkung auf das Aufzeichnungsmedium des optischen Informationsträgers zur Erzeugung einer Folge von Aufzeichungsinformationseinheiten und zur Informationslöschung ausübt, darin bestehend, daß die Erzeugung mindestens einer Informationseinheit aus der Folge der Aufzeichnungsinformationseinheiten durch Entfernung einer Aufzeichnungsschicht des optischen Informationsträgers durch eine energetische Einwirkung auf das Aufzeichnungsmedium und die Eliminierung mindestens einer

Informationseinheit aus der Folge der Aufzeichnungsinformationseinheiten durch Entfernung und/oder Auftragung einer Aufzeichnungsschicht des optischen Informationsträgers unter einer energetischen Einwirkung auf das Aufzeichnungsmedium vorgenommen wird, wobei die Entfernung und Auftragung der Aufzeichnungsschicht des optischen Informationsträgers durch Durchführung chemischer Reaktionen unter Beteiligung des Stoffes des Aufzeichnungsmediums und eines aktiven Stoffes realisiert werden, der eine chemische Affinität gegenüber dem Stoff des Aufzeichnungsmediums aufweist, gemäß der Erfindung der optische Informationsträger mit einer hermetisch abgedichteten Kammer eingesetzt wird, die eine wirksame Innenfläche mit mindestens einer Aufzeichnungsschicht und eine zusätzliche Innenfläche aufweist, in die hermetisch abgedichtete Kammer des optischen Informationsträgers der aktive, gegenüber dem Stoff des Aufzeichnungsmediums eine chemische Affinität aufweisende Stoff geleitet wird, wobei die Entfernung der Aufzeichnungsschicht im Bereich mindestens einer Informationseinheit durch Übertragung von Gasphasenprodukten einer chemischen Wechselwirkung des Stoffes des Aufzeichnungsmediums mit dem aktiven, gegenüber dem Stoff des Aufzeichnungsmediums eine chemische Affinität aufweisenden Stoff zur zusätzlichen Innenfläche der hermetisch abgedichteten Kammer des optischen Informationsträgers und durch Absetzung eines im Ergebnis dieser chemischen Wechselwirkung erhaltenen Zwischenstoffes auf der zusätzlichen Innenfläche durch eine energetische Einwirkung auf denjenigen Teil der wirksamen Innenfläche der hermetisch abgedichteten Kammer des optischen Informationsträgers im Bereich mindestens einer Informationseinheit, von dem die Aufzeichnungsschicht entfernt wird, unter Aufwand einer Energie der Entfernung der Aufzeichnungsschicht und durch Erhitzung der zusätzlichen Innenfläche der hermetisch abgedichteten Kammer des optischen Informationsträgers auf die Temperatur der Absetzung des Zwischenstoffes verwirklicht wird, während die Auftragung der Aufzeichnungsschicht im Bereich mindestens einer Informationseinheit durch Übertragung von Gasphasenprodukten einer chemischen Wechselwirkung des Zwischenstoffes mit dem aktiven, gegenüber dem Stoff des Aufzeichnungsmediums eine chemische Affinität aufweisenden Stoff auf einen Teil der wirksamen Innenfläche der hermetisch abgedichteten Kammer des optischen Informationsträgers im Bereich mindestens einer Informationseinheit durch Erhitzung der zusätzlichen Innenfläche der hermetisch abgedichteten Kammer des optischen Informationsträgers auf die Temperatur der Entfernung des Zwischenstoffes und durch eine energetische Einwirkung auf den Teil der wirksamen Innenfläche der hermetisch abgedichteten Kammer des optischen Informationsträgers im Bereich mindestens einer Informationseinheit unter Aufwand einer Energie der Absetzung der Aufzeichnungsschicht auf diesen Teil der wirksamen Innenfläche realisiert wird.

Die Aufgabe wird auch dadurch gelöst, daß in dem Informationsaufzeichnungs- und Löschverfahren für einen optischen Informationsträger, das bei einer relativen Verschiebung des optischen Informationsträgers und einer Strahlungsquelle gegeneinander zustande kommt, die eine energetische Einwirkung auf das Aufzeichnungsmedium des optischen Informationsträgers zur Erzeugung einer Folge von Aufzeichnungsinformationseinheiten und zur Informationslöschung ausübt, darin bestehend, daß die Erzeugung mindestens einer Informationseinheit aus der Folge der Aufzeichnungsinformationseinheiten durch Auftragung einer Aufzeichnungsschicht des optischen Informationsträgers unter einer energetischen Einwirkung auf das Aufzeichnungsmedium und die Eliminierung mindestens einer Informationseinheit aus der Folge der Aufzeichnungsinformationseinheiten durch Entfernung einer Aufzeichnungsschicht des optischen Informationsträgers durch

eine energetische Einwirkung auf das Aufzeichnungsmedium erfolgt, wobei die Entfernung und die Auftragung der Aufzeichnungsschicht des optischen Informationsträgers durch Durchführung chemischer Reaktionen unter Beteiligung des Stoffes des Aufzeichnungsmediums und des aktiven, gegenüber dem Stoff des Aufzeichnungsmediums eine chemische Affinität aufweisenden Stoffes vorgenommen werden, gemäß der Erfindung der optische Informationsträger mit einer hermetisch abgedichteten Kammer eingesetzt wird, die eine wirksame Innenfläche mit mindestens einer Aufzeichnungsschicht und eine zusätzliche Innenfläche aufweist, in die hermetisch abgedichtete Kammer des optisches Informationsträgers der aktive, gegenüber dem Stoff des Aufzeichnungsmediums eine chemische Affinität aufweisende Stoff geleitet wird, wobei die Entfernung der Aufzeichnungsschicht im Bereich mindestens einer Informationseinheit durch Übertragung von Gasphasenprodukten einer chemischen Wechselwirkung des Stoffes des Aufzeichnungsmediums mit dem aktiven, gegenüber dem Stoff des Aufzeichnungsmediums eine chemische Affinität aufweisenden Stoff zur zusätzlichen Innenfläche der hermetisch abgedichteten Kammer des optischen Informationsträgers und durch Absetzung eines im Ergebnis dieser chemischen Wechselwirkung erhaltenen Zwischenstoffes auf der zusätzlichen Innenfläche durch eine energetische Einwirkung auf denjednigen Teil der wirksamen Innenfläche der hermetisch abgedichteten Kammer des optischen Informationsträgers im Bereich mindestens einer Informationseinheit, von dem die Aufzeichnungsschicht entfernt wird, unter Aufwand einer Energie der Entfernung der Aufzeichnungsschicht und durch Erhitzung der zusätzlichen Innenfläche der hermetisch abgedichteten Kammer des optischen Informationsträgers auf die Temperatur der Absetzung des Zwischenstoffes verwirklicht wird, während die Auftragung der Aufzeichnungsschicht im Bereich mindestens einer Informationseinheit durch Übertragung von Gasphasenprodukten einer chemischen Wechselwirkung des Zwischenstoffes mit dem aktiven, gegenüber dem Stoff des Aufzeichnungsmediums eine chemische Affinität aufweisenden Stoff auf einen Teil der wirksamen Innenfläche der hermetisch abgedichteten Kammer des optischen Informationsträgers im Bereich mindestens einer Informationseinheit durch Erhitzung der zusätzlichen Innenfläche der hermetisch abgedichteten Kammer des optischen Informationsträgers auf die Temperatur der Entfernung des Zwischenstoffes und durch eine energetische Einwirkung auf den Teil der wirksamen Innenfläche der hermetisch abgedichteten Kammer des optischen Informationsträgers im Bereich mindestens einer Informationseinheit unter Aufwand einer Energie der Absetzung der Aufzeichnungsschicht auf diesen Teil der wirksamen Innenfläche realisiert wird.

Die Aufgabe wird ferner dadurch gelöst, daß in dem Informationsaufzeichnungs- und Löschverfahren für einen optischen Informationsträger, das bei einer relativen Verschiebung des optischen Informationsträgers und einer Strahlungsquelle gegeneinander zustande kommt, die eine energetische Einwirkung auf das Aufzeichnungsmedium des optischen Informationsträgers zur Erzeugung einer Folge von Aufzeichnungsinformationseinheiten und zur Informationslöschung ausübt, darin bestehend, daß die Erzeugung mindestens einer Informationseinheit aus der Folge der Aufzeichnungsinformationseinheiten durch Entfernung einer Aufzeichnungsschicht des optischen Informationsträgers durch eine energetische Einwirkung auf das Aufzeichnungsmedium und die Eliminierung mindestens einer Informationseinheit aus der Folge der Aufzeichnungsinformationseinheiten durch Entfernung und/oder Auftragung einer Aufzeichnungsschicht des optischen Informationsträgers unter einer energetischen Einwirkung auf dieses Aufzeichnungsmedium vorgenommen wird, gemäß der Erfindung der optische Informationsträger mit einer hermetisch abgedichteten Kammer eingesetzt wird, die eine wirksame

Innenfläche mit mindestens einer Aufzeichnungsschicht und eine zusätzliche Innenfläche aufweist, in die hermetisch abgedichtete Kammer des optischen Informationsträgers ein aktiver, gegenüber dem Stoff des Aufzeichnungsmediums eine chemische Affinität aufweisender Stoff geleitet wird, wobei die Entfernung der Aufzeichnungsschicht im Bereich mindestens einer Informationseinheit durch eine energetische Einwirkung nur auf denjenigen Teil der wirksamen Innenfläche der hermetisch abgedichteten Kammer des optischen Informationsträgers im Bereich mindestens einer Informationseinheit, von dem die Aufzeichnungsschicht entfernt wird, unter Aufwand einer Energie der Entfernung der Aufzeichnungsschicht verwirklicht wird, während die Auftragung der Aufzeichnungsschicht im Bereich mindestens einer Informationseinheit durch Übertragung von Gasphasenprodukten einer chemischen Wechselwirkung des aktiven, gegenüber dem Stoff des Aufzeichnungsmediums eine chemische Affinität aufweisenden Stoffes mit einem im Ergebnis einer chemischen Wechselwirkung des Stoffes des Aufzeichnungsmediums mit dem aktiven, gegenüber dem Stoff des Aufzeichnungsmediums eine chemische Affinität aufweisenden Stoff erhaltenen Zwischenstoff auf einen Teil der wirksamen Innenfläche der hermetisch abgedichteten Kammer des optischen Informationsträgers im Bereich mindestens einer Informationseinheit durch Erhitzung der zusätzlichen Innenfläche der hermetisch abgedichteten Kammer des optischen Informationsträgers auf die Temperatur der Entfernung des Zwischenstoffes und durch eine energetische Einwirkung auf den Teil der wirksamen Innenfläche der hermetisch abgedichteten Kammer des optischen Informationsträgers im Bereich mindestens einer Informationseinheit unter Aufwand einer Energie der Absetzung der Aufzeichnungsschicht auf diesen Teil der wirksamen Innenfläche realisiert wird.

Die Aufgabe wird auch dadurch gelöst, daß in dem

optischen Speicher zur Informationsaufzeichnung und -löschung auf einem optischen Informationsträger, der einen optischen Informationsträger mit einem Aufzeichnungsmedium eine Strahlungsquelle für eine energetische Einwirkung auf das Aufzeichnungsmedium des optischen Informationsträgers durch Bestrahlung, einen aktiven, gegenüber dem Stoff des Aufzeichnungsmediums eine chemische Affinität aufweisenden Stoff, eine mit dem optischen Informationsträger und der Strahlungsquelle verbundene Adressierungseinheit für Informationseinheiten, die eine kontrollierbare relative Verschiebung des optischen Informationsträgers mit dem Aufzeichnungsmedium und der Strahlungsquelle gegeneinander ausführt, und einen Erhitzer enthält, gemäß der Erfindung der optische Informationsträger eingesetzt wird, der mit einer hermetisch abgedichteten Kammer versehen ist, die eine im Wärmekontakt mit dem Erhitzer stehende wirksame und zusätzliche Innenfläche besitzt, wobei das Aufzeichnungsmedium in Form mindestens einer Schicht auf der wirksamen Innenfläche der hermetisch abgedichteten Kammer des optischen Informationsträgers aufliegt, die mit dem aktiven, gegenüber dem Stoff des Aufzeichungsmediums eine chemische Affinität aufweisenden Stoff versehen ist.

Die Erfindung gestattet es, eine mehrfache chemische Regenerierung von Abschnitten des Aufzeichnungsmediums des Informationsträgers im Vorgang der Informationsverarbeitung in einem geschlossenen System des Informationsträgers durchzuführen, was es erlaubt, die Zykluszahl bei der Überschreibung, die Zuverlässigkeit der Systeme zur Informationsaufzeichnung und -speicherung zu erhöhen, kleinformatige Massenspeichersysteme zu schaffen.

Um das Erfindungswesen deutlicher darzustellen, wird nachstehend eine Erläuterung folgender Fachwörter angeführt. Unter dem Terminus Energie der Entfernung einer Aufzeichnungsschicht ist eine Energie zu verstehen, die

der wirksamen Innenfläche der hermetisch abgedichteten Kammer des optischen Informationsträgers verliehen wird und die ausreicht, um eine Aufzeichnungsschicht von dieser Fläche zu entfernen, es geht also um eine Energie, mit der auf das Aufzeichnungsmedium eingewirkt werden muß, um die Temperatur der Entfernung der Aufzeichnungsschicht im Laufe der erforderlichen Zeit zu erreichen und damit die Aufzeichnungsschicht aus dem erforderlichen Bereich der wirksamen Innenfläche der hermetisch abgedichteten Kammer des optischen Informationsträgers zu entfernen.

Unter dem Fachausdruck Temperatur der Absetzung des Zwischenstoffes wird eine Temperatur verstanden, bei der die Geschwindigkeit der chemischen Niederschlagsreaktionen für den Zwischenstoff ausreichend ist, um die erforderliche Menge des Zwischenstoffes für die erforderliche Zeit abzusetzen.

Unter dem Fachausdruck Temperatur der Entfernung des Zwischenstoffes wird eine Temperatur verstanden, bei der die Geschwindigkeit der chemischen Reaktionen der Entfernung des Zwischenstoffes ausreicht, um die erforderliche Menge des Zwischenstoffes für die erforderliche Zeit zu entfernen.

Unter dem Fachausdruck Energie der Absetzung einer Aufzeichnungsschicht wird eine Energie verstanden, mit der auf das Aufzeichnungsmedium eingewirkt werden muß, um die Temperatur der Absetzung der Aufzeichnungsschicht im Laufe der erforderlichen Zeit zu sichern und damit die Aufzeichnungsschicht im erforderlichen Bereich der wirksamen Innenfläche der hermetisch abgedichteten Kammer des optischen Informationsträgers abzusetzen.

## Kurze Beschreibung der Zeichnungen

Die Erfindung soll nachstehend an einem konkreten Ausführungsbeispiel anhand der beiliegenden Zeichnungen näher erläutert werden. Es zeigt:

Fig. 1 eine konstruktive Ausführung eines erfindungs-

gemässen optischen Speichers zur Informationsaufzeichnung und -löschung auf einem optischen Informationsspeicher im Längsschnitt;

Fig. 2 eine konstruktive Ausführung eines erfindungsgemässen optischen Speichers zur Informationsaufzeichnung und -Löschung auf einem optischen Informationsspeicher mit einer in zwei Teile getrennten hermetisch abgedichteten Kammer des optischen Informationsträgers im Längsschnitt.

Bevorzugte Ausführungsform der Erfindung

Der optische Speicher zur Informationsaufzeichnung und -löschung auf einem optischen Informationträger enthält einen optischen Informationsträger 1 (Fig. 1), der eine Zylinderform aufweist, aus einem transparenten Stoff hergestellt und mit einer hermetisch abgedichteten Kammer 2 versehen ist. Die hermetisch abgedichtete Kammer 2 weist eine wirksame Innenfläche 3 mit mindestens einer Aufzeichnungsschicht 4 und eine zusätzliche Innenfläche 5 auf. In der hermetisch abgedichteten Kammer 2 gibt es einen aktiven, gegenüber dem Stoff des Aufzeichnungsmediums 4 eine chemische Affinität aufweisenden Stoff 6.

Der optische Speicher enthält auch eine einen Laser 8 und ein Objektiv 9 aufweisende Strahlungsquelle 7 energetischer Einwirkung auf das Aufzeichnungsmedium 4 der hermetisch abgedichteten Kammer 2 des optischen Informationsträgers 1 und ausserdem noch eine Adressierungseinheit 10 für Informationseinheiten, die eine kontrollierbare relative Verschiebung des optischen Informationsträgers 1 und der Strahlungsquelle 7 energetischer Einwirkung auf das Aufzeichnungsmedium 4 an der hermetisch abgedichteten Kammer 2 des optischen Informationsträgers 1 ausführt. Die relative Verschiebung des optischen Informationsträgers 1 und der Strahlungsquelle 7 gegeneinander ist notwendig,

um eine Folge von Aufzeichnungsinformationseinheiten zu schaffen und die Informationen zu löschen.

Darüber hinaus hat der optische Speicher einen Erhitzer 11, der in Wärmekontakt mit der wirksamen Innenfläche 3 und der zusätzlichen Innenfläche 5 der hermetisch abgedichteten Kammer 2 des optischen Informationsträgers 1 steht. In der hermetisch abgedichteten Kammer 2 ist ein Zwischenstoff 12 vorhanden, der beispielsweise auf der zusätzlichen Oberfläche 5 liegt.

Die hermetisch abgedichtete Kammer 2 kann durch eine Buchse 13 (Fig. 2) in zwei Teile getrennt werden, um den Wärmekontakt zwischen der wirksamen Innenfläche 3 und der zusätzlichen Innenfläche 5 der hermetisch abgedichteten Kammer 2 abzuschwächen.

Das Informationsaufzeichnungs- und Löschverfahren für einen optischen Informationsträger kommt bei einer relativen Verschiebung des optischen Informationsträgers 1 und der Strahlungsquelle 7 gegeneinander zustande, die für eine energetische Einwirkung auf das Aufzeichnungsmedium 4 des optischen Informationsträgers 1 sorgt, um eine Folge von Aufzeichnungsinformationseinheiten zu erzeugen und die Informationen zu löschen. Die Erzeugung mindestens einer Informationseinheit aus einer Folge von Aufzeichnungsinformationseinheiten erfolgt durch Entfernung einer Aufzeichnungsschicht 4 des optischen Informationsträgers 1 durch eine energetische Einwirkung auf dieses Aufzeichnungsmedium 4. Die Eliminierung mindestens einer Informationseinheit aus einer Folge von Aufzeichnunginformationseinheiten wird durch Auftragung und/oder Entfernung einer Aufzeichnungsschicht 4 unter einer energetischen Einwirkung auf dieses Aufzeichnungsmedium 4 erreicht. Die energetische Einwirkung kann sowohl durch die Strahlungsquelle 7 mit lokaler energetischer Wirkung, beispielsweise durch einen Laser mit einem Fokussierungsobjektiv, als auch durch einen Erhitzer, beispielsweise einen Ofen, ausgeübt werden. Die Entfernung und/oder die Auftragung einer Aufzeichnungsschicht des optischen Informationsträgers geschieht durch Durchführung chemischer Reaktionen, an denen der Stoff des Aufzeichnungsmediums 4 und der aktive, gegenüber dem Stoff des Aufzeichnungsmediums eine chemische Affinität aufweisende Stoff 6 teilnehmen. Im Verfahren kommt der optische Informationsträger 1 mit der hermetisch abgedichteten Kammer 2 zur Anwendung, die eine wirksame Innenfläche 3 mit mindestens einer Aufzeichnungsschicht 4 und eine zusätzliche Innenfläche 5 aufweist. In die hermetisch abgedichtete Kammer 2 des optischen Informationsträgers 1 wird bei dessen Herstellung der aktive Stoff 6 eingeführt, der gegenüber dem Stoff des Aufzeichnungsmediums 4 eine chemische Affinität besitzt. Die Entfernung der Aufzeichnungsschicht 4 aus dem Bereich mindestens einer Informationseinheit erfolgt durch Übertragung von Gasphasenprodukten einer chemischen Wechselwirkung des Aufzeichnungsmediums 4 mit dem aktiven, gegenüber dem Stoff des Aufzeichnungsmediums 4 eine chemische Affinität aufweisenden Stoff 6 zur zusätzlichen Innenfläche 5 der hermetisch abgedichteten Kammer 2 des optischen Informationsträgers 1 und durch Absetzung eines im Ergebnis dieser chemischen Wechselwirkung erhaltenen Zwischenstoffes 12 auf dieser Oberfläche 5. Dies geschieht bei einer energetischen Einwirkung auf denjenigen Teil der wirksamen Innenfläche 3 der hermetisch abgedichteten Kammer 2 des optischen Informationsträgers 1 im Bereich mindestens einer Informationseinheit, von dem die Aufzeichnungsschicht 4 unter Aufwand einer Energie der Entfernung der Aufzeichnungsschicht 4 entfernt wird, und durch Erhitzung der zusätzlichen Innenfläche 5 der hermetisch abgedichteten Kammer 2 des optischen Informationsträgers 1 auf die Temperatur der Absetzung des Zwischenstoffes 12. Die Aufzeichnungsschicht 4 wird von der wirksamen Innenfläche 3 der hermetisch abgedichteten Kammer 2 des optischen Informationsträgers 1 im Bereich

einer oder mehrerer Informationseinheiten, beispielsweise bei der Aufzeichnung eines Informationsbytes, oder von der gesamten wirksamen Innenfläche der hermetisch abgedichteten Kammer 2, beispielsweise bei der Löschung einer Informationsmenge, entfernt.

Die Entfernung der Aufzeichnungsschicht 4 auf dem Wege der Durchführung chemischer Reaktionen erfolgt durch eine energetische Einwirkung auf denjenigen Teil der wirksamen Innenfläche 3 der hermetisch abgedichteten Kammer 2 des optischen Informationsträgers 1, von dem die Aufzeichnungsschicht 4 entfernt wird. Bei der Aufzeichnung eines Informationsbytes im Bereich der aufzuzeichnenden Informationseinheiten erfolgt die Entfernung der Aufzeichnungsschicht beispielsweise durch eine Quelle lokaler energetischer Wirkung und bei der Löschung einer Informationsmenge im Speicherbereich dieser Menge auf der wirksamen Innenfläche 3 der hermetisch abgedichteten Kammer 2 des optischen Informationsträgers 1 durch eine Erhitzung. Die Größe der energetischen Einwirkung ist gleich einer Energie, die für die Entfernung einer Aufzeichnungsschicht erforderlich ist. Die für die Entfernung der Aufzeichnungsschicht benötigte Energie richtet sich nach der Temperatur der Entfernung und der Geschwindigkeit der chemischen Reaktionen und kann für einen konkreten Fall experimentell ermittelt werden. Die Gasphasenprodukte der chemischen Wechselwirkung der Aufzeichnungsschicht 4 mit dem aktiven, gegenüber dem Stoff des Aufzeichnungsmediums eine chemische Affinität aufweisenden Stoff werden beispielsweise im Ergebnis einer Diffusion zur zusätzlichen Innenfläche 5 der hermetisch abgedichteten Kammer 2 des optischen Informationsträgers 1 übertragen und auf dieser infolge chemischer Reaktionen in Form eines Zwischenstoffes 12 abgesetzt.

Die Auftragung der Aufzeichnungsschicht 4 vollzieht sich im Bereich mindestens einer Informationseinheit, beispielsweise also bei der Löschung eines Informationsbytes im Bereich jeder seiner Informationseinheiten und bei der Regenerierung des Aufzeichnungsmediums 4 für eine Informationsmenge im Speicherbereich dieser Menge auf der wirksamen Innenfläche 3 der hermetisch abgedichteten Kammer 2 des optischen Informationsträgers 1. Die Auftragung wird durch Transport von Gasphasenprodukten einer chemischen Wechselwirkung des Zwischenstofes mit dem aktiven, gegenüber dem Stoff des Aufzeichnungsmediums eine chemische Affinität aufweisenden Stoff auf einen Teil der wirksamen Innenfläche 3 der hermetisch abgedichteten Kammer 2 des optischen Informationsträgers 1 durch Erhitzung der zusätzlichen Innenfläche 5 der hermetisch abgedichteten Kammer 2 des optischen Informationsträgers 1 auf die Temperatur der Entfernung des Zwischenstoffes 12 und durch energetische Einwirkung auf den Teil der wirksamen Innenfläche 3 der hermetisch abgedichteten Kammer 2 des optischen Informationsträgers 1 unter Aufwand einer Energie realisiert, die der Energie der Absetzung der Aufzeichnungsschicht 4 auf diesem Teil der wirksamen Innenfläche 3 gleich ist. Die Energie der Absetzung der Aufzeichnungsschicht 4 richtet sich nach der Temperatur, bei der derartige Absetzung stattfindet, und nach der Geschwindigkeit der chemischen Reaktionen und kann für einen konkreten Fall experimentell ermittelt werden. Sämtliche Vorgänge können mehrfach wiederholt werden.

Infolge der Entfernung der Aufzeichnungsschicht 4 und deren anschließender Auftragung auf dem Wege der Durchführung der chemischen Raktionen durch Übertragung der Gasphasenprodukte der chemischen Wechselwirkung des Zwischenstoffes 12 mit dem aktiven, gegenüber dem Stoff des Aufzeichnungsmediums 4 eine chemische Affinität aufweisenden Stoff 6 und durch Absetzung des Stoffes des Aufzeichnungsmediums 4 erhält man eine Aufzeichnungsschicht 4, die die gleichen physikalisch-chemischen Eigenschaften besitzt, wie sie die Aufzeichnungsschicht 4

vor ihrer Entfernung hatte. Es erfolgt also eine Regenerierung der Aufzeichnungsschicht 4. In einem geschlossenen System des optischen Informationsträgers 1 wird also durch Schaffung von Bedingungen für den Ablauf von reversiblen chemischen Reaktionen unter Beteiligung des Stoffes des Aufzeichnungsmediums eine mehrfache chemische Regenerierung von Abschnitten des Aufzeichnungsmediums 4 des optischen Informationsträgers 1 im Vorgang der Informationsaufzeichnung und -löschung verwirklicht. Dies sichert eine Vergrößerung der Zykluszahl bei der Informationsüberschreibung und eine Erhöhung der Zuverlässigkeit der Systeme zur Informationsaufzeichnung und -speicherung. Die Information kann in einem beliebigen Verfahren abgelesen werden.

Es ist auch ein Informationsaufzeichnungs- und Löschverfahren für einen optischen Informationsträger möglich, das bei einer relativen Verschiebung des optischen Informationsträgers 1 und der Strahlungsquelle 7 gegeneinander erfolgt, die für eine energetische Einwirkung auf das Aufzeichnungsmedium 4 des optischen Infomationsträgers 1 zur Erzeugung einer Folge von Aufzeichnungsinformationseinheiten und für die Erzeugung mindestens einer Informationseinheit aus der Folge der Aufzeichnungsinformationseinheiten sorgt, bei der die Auftragung einer Schicht des Aufzeichnungsmediums 4 des optischen Informationsträgers 1 durch eine energetische Einwirkung auf dieses Aufzeichnungsmedium 4 im Bereich mindestens einer Informationseinheit geschieht, während die Eliminierung mindestens einer Informationseinheit aus der Folge der Aufzeichnungsinformationseinheiten durch Entfernung einer Schicht des Aufzeichnungsmediums 4 des optischen Informationsträgers 1 durch eine energetische Einwirkung auf dieses Aufzeichnungsmedium 4 zustande kommt. Das heißt, daß das Aufzeichnungsmedium 4 im Ausgangszustand beispielsweise Reihen von Vertiefungen darstellt, die durch Auftragung einer Aufzeichnungsschicht 4 bei der Aufzeichnung der Informationseinheiten

gefüllt werden. Dann ist bei der Löschung von beispielsweise einem Informationsbytes das Aufzeichnungsmedium 4 nur aus dem Bereich von diesem Byte zugeordneten Vertiefungen zu entfernen. Derartiges Informationsaufzeichnungs- und Löschverfahren für einen optischen Informationsträger 1 stellt eine andere Organisierung der Reihenfolge der gleichen physikalischen und chemischen Vorgänge der Auftragung und Entfernung der Aufzeichnungsschicht 4 des optischen Informationsträgers 1 bei der energetischen Einwirkung auf dieses Aufzeichnungsmedium 4 dar. Die Bedingungen für den Ablauf der reversiblen chemischen Reaktionen unter Beteiligung des Aufzeichnungsmediums 4 werden durch die physikalischen und chemischen Vorgänge bei der Auftragung und Entfernung der Aufzeichnungsschicht 4 des optischen Informationsträgers 1 geschaffen.

Die Vorgänge der Übertragung der Gasphasenprodukte der chemischen Wechselwirkung des Stoffes des Aufzeichnungsmediums 4 mit dem aktiven, gegenüber dem Stoff des Aufzeichnungsmediums 4 eine chemische Affinität aufweisenden Stoff 6 und der Absetzung des im Ergebnis dieser Wechselwirkung erhaltenen Zwischenstoffes 12 sowie die Vorgänge der Wechselwirkung des Zwischenstoffes 12 mit dem aktiven, gegenüber dem Stoff des Aufzeichnungsmediums 4 eine chemische Affinität aufweisenden Stoff 6 und der Absetzung der Aufzeichnungsschicht 4 auf der wirksamen Innenfläche 3 der hermetisch abgedichteten Kammer 2 sind reversibel. Derartiges Informationsaufzeichnungs- und Löschverfahren gestattet es also, eine mehrfache chemische Regenerierung von Abschnitten des Aufzeichnungsmediums 4 des optischen Informationsträgers 1 im Vorgang der Informationsverarbeitung vorzunehmen. Also auch dieses Verfahren erlaubt es, die Zylüszahl bei der Informationsüberschreibung zu vergrößern und die Zuverlässigkeit der Systeme zur Infomationsaufzeichnung und -speicherung zu erhöhen.

Es ist ein Informationsaufzeichnungs- und Löschverfahren für einen optischen Informationsträger möglich, das bei einer relativen Verschiebung des optischen Informationsträgers 1 und der Strahlungsquelle 7 gegeneinander erfolgt, die für eine energetische Einwirkung des optischen Informationsträgers 1 auf das Aufzeichnungsmedium 4 zur Erzeugung einer Folge von Aufzeichnungsinformationseinheiten und für die Erzeugnung mindestens einer Informationseinheit aus dieser Folge der Aufzeichnungsinformationseinheiten sorgt, bei der die Entfernung der Aufzeichnungsschicht 4 nur durch die energetische Einwirkung auf denjenigen Teil der wirksamen Fläche 3 der hermetisch abgedichteten Kammer 2 des optischen Informationsträgers 1 im Bereich mindestens einer Informationseinheit, von dem die Aufzeichnungsschicht 4 entfernt wird, unter Aufwand der Energie der Entfernung der Aufzeichnungsschicht 4 vollführt wird. Die Eliminierung mindestens einer Informationseinheit aus einer Folge von Aufzeichnungsinformationseinheiten geschieht durch Entfernung und/oder Auftragung einer Aufzeichnungsschicht 4 im Bereich mindestens einer Informationseinheit durch Übertragung von Gasphasenprodukten einer chemischen Wechselwirkung des aktiven, gegenüber dem Stoff des Aufzeichnungsmediums 4 eine chemische Affinität aufweisenden Stoffes 6 mit dem infolge einer chemischen Wechselwirkung des Stoffes des Aufzeichnungsmediums 4 mit dem aktiven, gegenüber dem Stoff des Aufzeichnungsmediums 4 eine chemische Affinität aufweisenden Stoff 6 erhaltenen Zwischenstoff 12 auf einen Teil der wirksamen Fläche 3 der hermetisch abgedichteten Kammer 2 des optischen Informationsträgers 1 im Bereich mindestens einer Informationseinheit. Diese Vorgänge finden dank der Erwärmung der zusätzlichen Fläche 5 der hermetisch abgedichteten Kammer 2 des optischen Informationsträgers 1 auf die Temperatur der Entfernung des Zwischenstoffes 12 und durch eine energetische Einwirkung auf einen Teil der wirksamen Fläche 3 der hermetisch abgedichteten Kammer 2 des optischen Informationsträgers 1 im Bereich mindestens einer Informationseinheit unter Aufwand der Energie der Absetzung einer Aufzeichnungsschicht 4 auf diesem Teil der wirksamen Fläche statt.

Derartiges Verfahren gestattet es auch, eine mehrfache chemische Regenerierung von Abschnitten des Aufzeichnungsmediums 4 des optischen Informationsträgers in einem geschlossenen System im Vorgang der Informationsverarbeitung, d.h. im Vorgang der Informationsaufzeichnung und -löschung, vorzunehmen. Also auch dieses Verfahren erlaubt es, die Zykluszahl bei der Informationsüberschreibung zu vergrößern und die Zuverlässigkeit der Systeme zur Informationsaufzeichnung und -speicherung zu erhöhen.

Der optische Speicher zur Informationsaufzeichnung und -löschung auf einem optischen Informationsträger arbeitet wie folgt.

Der optische Informationsträger 1 (Fig. 1) wird um seine Längsachse mit Hilfe der Adressierungseinheit 10 in Drehung versetzt, während sich die Strahlungsquelle 7 für eine energetische Einwirkung auf das Aufzeichnungsmedium 4 des optischen Infomationsträgers 1 bezüglich des optischen Informationsträgers 1 auch mit Hilfe der Adressierungseinheit 10 verschiebt. Die Wärme vom Erhitzer 11 wird an die wirksame Innenfläche 2 und die zusätzliche Innenfläche 5 des optischen Informationsträgers 1 auf Grund der Wärmeleitfähigkeit der Stoffe des optischen Informationsträgers 1 vermittelt. Die Aufzeichnungsschicht 4 wird von der wirksamen Fläche 3 der hermetisch abgedichteten Kammer 2 des optischen Informationsträgers 1 durch Übertragung der Gasphasenprodukte der chemischen Wechselwirkung des Stoffes des Aufzeichnungsmediums 4 mit dem aktiven, gegenüber dem Stoff des Aufzeichnungsmediums 4 eine chemische Affinität

aufweisenden Stoff 6 zur zusätzlichen Fläche 5 der Kammer 2 des optischen Informationsträgers 1 und durch Absetzung des infolge dieser Wechselwirkung erhaltenen Zwischenstoffes 12 auf dieser Fläche 5 entfernt. Um die Aufzeichnungsschicht 4 von der wirksamen Innenfläche 3 zu entfernen, wird energetisch auf den Teil der wirksamen Innenfläche 3 der hermetisch abgedichteten Kammer 2 des optischen Informationsträgers 1 eingewirkt, von dem die Aufzeichnungsschicht 4 entfernt wird. Die energetische Einwirkung erfolgt durch Bestrahlung des Aufzeichnungsmediums 4 von der Strahlungsquelle 7.

Die Auftragung der Aufzeichnungsschicht 4 erfolgt durch Übertragung der Gasphasenprodukte der chemischen Wechselwirkung des Zwischenstoffes 12 mit dem aktiven, gegenüber dem Stoff des Aufzeichnungsmediums 4 eine chemische Affinität aufweisenden Stoff 6 auf die wirksame Innenfläche 3 der hermetisch abgedichteten Kammer 2 des optischen Informationsträgers 1. Die Übertragung der Gasphasenprodukte geschieht auf Grund einer Diffusion oder Konvektion der Gasphasenprodukte. Die Arbeitsgänge zur Ausübung der energetischen Einwirkung sind ähnlich den gleichen Arbeitsgängen zur Entfernung der Aufzeichnungsschicht 4.

Der in Fig. 2 dargestellte Speicher zur Informationsaufzeichnung und -löschung auf einem optischen Infomationsträger arbeitet in Analogie zu dem in Fig. 1 dargestellten Speicher.

Die Isolationsbuchse 13 ist zur Reduzierung des Wärmeaustausches zwischen der wirksamen Innenfläche 3 und der zusätzlichen Innenfläche 5 des optischen Informationsträgers 1 vorgesehen. Der optische Speicher zur Informationsaufzeichnung und -löschung auf einem optischen Informationsspeicher gestattet es also, eine mehrfache chemische Regenerierung von Abschnitten des Aufzeichnungsmediums in einem geschlossenen System eines optischen Informationsträgers vorzunehmen, was eine Vergrößerung der Zykluszahl bei der Informationsüberschreibung und eine Erhöhung der Zuverlässigkeit der Systeme zur Informationsaufzeichnung und -speicherung sichert.

Nachstehend werden konkrete Beispiele angeführt, die die Möglichkeit der Realisierung des erfindungsgemässen Informationsaufzeichnungs- und Löschverfahrens für einen optischen Informationsträger bestätigen.

Beispiel 1

In der in Fig. 1 aufgeführten Ausführungsform des Informationsaufzeichnungs- und Löschverfahrens für einen optischen Informationsträger basiert der Vorgang der Regenerierung des Aufzeichnungsmediums 4 auf Gastransportreaktionen für Wismutchlorid. Der Stoff des Aufzeichnungsmediums 4 stellt einen 30 nm dicken Film aus Wismut dar. Als aktives, gegenüber dem Stoff des Aufzeichnungsmediums 4 eine chemische Affinität aufweisender Stoff tritt gasförmiges Chlor ($Cl_2$) auf. Die Erzeugung von Informationseinheiten erfolgt durch Entfernung des Aufzeichnungsmediums 4 infolge einer lokalen energetischen Einwirkung auf das Aufzeichnungsmedium 4 im Bereich mindestens einer Informationseinheit ohne Anwendung von chemischen Reaktionen. Die Vertiefung wird durch Erschmelzen und Auswurf des Stoffes des Aufzeichnungsmediums 4 aus dem Bereich des Aufzeichnungsmediums 4 ausgebildet, wo die Informationseinheit erzeugt werden muss. Die Energie der Einwirkung auf das Aufzeichnungsmedium 4 beträgt dabei $3 \cdot 10^{-10}$ $J/m^2$. Um die Information zu löschen, wird das Aufzeichnungsmedium 4 gleichzeitig vor der gesamten wirksamen Innenfläche 3 des optischen Informationsträgers 1 weggetragen. Das Aufzeichnungsmedium 4 wird von der wirksamen Innenfläche 3 der hermetisch abgedichteten Kammer 2 des optischen Informationsträgers 1 durch eine energetische Einwirkung, beispielsweise durch Erhitzung der wirksamen Innenfläche 3 mit Hilfe des Erhitzers 11 auf eine Temperatur von 900°C und der zusätzlichen Innenfläche 5 der hermetisch abgedichteten Kammer 2 des optischen Informationsträgers 1 auf eine Temperatur von 600°C entfernt. Auf der wirksamen Innenfläche 3 der hermetisch abgedichteten Kammer 2 des optischen Informationsträgers 1 geht das gasförmige Chlor eine Reaktion mit Wismut ein, wodurch ein Gasphasenprodukt gemäß Gleichung

$$2Bi + 3Cl_2 = 2BiCl_3 \qquad (1)$$

gebildet wird. Auf der wirksamen Innenfläche 3 der hermetisch abgedichteten Kammer 2 des optischen Informationsträgers 1 läuft eine chemische Reaktion gemäß Gleichung

$$2Bi + BiCl_3 = 3BiCl \qquad (2)$$

ab.

Der Zwischenstoff BiCl (Wismutchlorid) wird zur zusätzlichen Innenfläche 5 der hermetisch abgedichteten Kammer 2 des optischen Informationsträgers 1 durch Diffusion übertragen. Im folgenden verläuft auf dieser zusätzlichen Innenfläche 5 eine Reaktion gemäß Gleichung

$$3BiCl = BiCl_3 + 2Bi \qquad (3)$$

Die Absetzung des Zwischenstoffes BiCl erfolgt in diesem Fall im Ergebnis dieser chemischen Reaktion.

Gemäß Gleichungen (1) und (2) wird die Übertragung des gesamten Stoffes des Aufzeichnungsmediums 4 aus dem Bereich mindestens einer Informationseinheit auf die zusätzliche Innenfläche 5 der hermetisch abgedichteten Kammer 2 des optischen Informationsträgers 1 gewährleistet.

Die Auftragung der gesamten Aufzeichnungsschicht 4 auf die gesamte wirksame Innenfläche 3 der hermetisch abgedichteten Kammer 2 des optischen Informationsspeichers 1 erfolgt durch Übertragung von Wismut von der zusätzlichen Innenfläche 5 auf die wirksame Innenfläche 3

der hermetisch abgedichteten Kammer 2 des optischen Informationsträgers 1 auch auf dem Wege der Durchführung von chemischen Reaktionen. Zu diesem Zweck wird die zusätzliche Innenfläche 5 mittels des Erhitzers 11 auf die Temperatur der Entfernung des Zwischenstoffes 12 von 900°C erwärmt, während auf die gesamte wirksame Innenfläche 3 eine energetische Einwirkung in Form einer Erwärmung auf die Temperatur der Auftragung des Zwischenstoffes 6 von 600°C durch den Erhitzer 11 ausgeübt wird. Auf der zusätzlichen Innenfläche 5 läuft eine chemische Reaktion gemäß Gleichung 2 ab. Die Gasphasenprodukte werden zur wirksamen Innenfläche 3 durch Diffusion übertragen. Auf der wirksamen Innenfläche 3 zerfällt BiCl entsprechend einer Reaktion gemäß Gleichung (3).

Im Ergebnis des Ablaufes der Reaktionen gemäß Gleichungen (1), (2), (3) auf der zusätzlichen Innenfläche 5 und der wirksamen Innenfläche 3 der hermetisch abgedichteten Kammer 2 des optischen Informationsträgers 1 bildet sich auf der wirksamen Innenfläche 3 nach der Abkühlung des optischen Informationsträgers 1 erneut ein vorzüglicher Wismutfilm aus, das Aufzeichnungsmedium 4 wird also regeneriert. Die Vorgänge können mehrfach wiederholt werden.

Beispiel 2

In der in Fig. 2 dargestellten Ausführungsform des Informationsaufzeichnungs- und Löschverfahrens für einen optischen Informationsträger basieren die Vorgänge der Entfernung der Aufzeichnungsschicht 4 durch Durchführung chemischer Reaktionen und der Auftragung dieser Schicht auf Gasphasenreaktionen unter Beteiligung von Niobjodiden (Nb). Als Stoff des Aufzeichnungsmediums 4 tritt ein Niobfilm von 25 nm Dicke auf. Als aktiver, gegenüber dem Stoff des Aufzeichnungsmediums 4 eine chemische Auffinität aufweisender Stoff dient Jod. Die Informationseinheiten werden durch Entfernung der Aufzeichnungsschicht 4 auf dem Wege der Durchführung der chemischen Reaktionen durch eine lokale energetische Einwirkung auf das Aufzeichnungsmedium 4 erzeugt. Die Energie der Entfernung der Aufzeichnungsschicht richtet sich nach der Temperatur der Entfernung der Aufzeichnungsschicht im Laufe der erforderlichen Zeit. Die Entfernung der Aufzeichnungsschicht 4 erfolgt durch Übertragung der Gasphasenprodukte einer chemischen Reaktion gemäß Gleichung

$$2Nb + 10J = 2\ NbJ_5\ , \qquad (4)$$

die auf der wirksamen Innenfläche 3 der hermetisch abgedichteten Kammer 2 des optischen Informationsträgers 1 bei einer Temperatur von ca. 470°C abläuft. Die Temperatur von 470°C auf der wirksamen Innenfläche 3 der hermetisch abgedichteten Kammer 2 des optischen Informationsträgers 1 wird bei einer energetischen Einwirkung durch eine Quelle lokaler energetischer Wirkung, d.h. durch einen fokussierten Laserstrahl mit einer Energie von $2{,}2 \cdot 10^{-9}\ J/\mu m^2$, im Laufe der Zeit der Entfernung der Aufzeichnungsschicht 4 von 1 $\mu s$ erreicht.

Die zusätzliche Innenfläche 5 der hermetisch abgedichteten Kammer 2 des optischen Informationsträgers 1 wird auf die Temperatur der Absetzung des Zwischenstoffes von 680°C erwärmt. Der zu übertragende Stoff - Niobpentajodid ($NbJ_5$) - wird durch Konvektion zur zusätzlichen Innenfläche 5 übertragen und auf dieser Fläche 5 in Form eines Niobfilmes abgesetzt. Auf der zusätzlichen Innenfläche 5 läuft eine chemische Reaktion gemäß Gleichung

$$2NbJ_5 = 10J + 2Nb \qquad (5)$$

ab.

Die auf der gesamten wirksamen Innenfläche 3 der hermetisch abgedichteten Kammer 2 des optischen Informationsträgers 1 aufgezeichnete Informationsmenge wird durch Entfernung sämtlicher aufgezeichneten Informationseinheiten durch Abtragung der Aufzeichnungsschicht 4 von dieser wirksamen Innenfläche 3 gelöscht.

Die Entfernung der Aufzeichnungsschicht 4 von der wirksamen Innenfläche 3 der hermetisch abgedichteten Kammer 2 des optischen Informationsträgers 1 erfolgt durch eine energetische Einwirkung in Form einer Erwärmung der wirksamen Innenfläche 3 der hermetisch abgedichteten Kammer 2 des optischen Informationsträgers 1 mit Hilfe des Erhitzers 11, wobei die zusätzliche Innenfläche 5 gleichfalls durch den Erhitzer 11 erwärmt wird. Die Größe der energetischen Einwirkung herlegt die Temperatur der wirksamen Innenfläche 3 der hermetisch abgedichteten Kammer 2 des optischen Informationsträgers 1 gleich 470°C fest, während die zusätzliche Innenfläche 5 auf die Temperatur von 680°C erhitzt wird.

Die Vorgänge der Übertragung des Aufzeichnungsmediums 4 werden durch chemische Reaktionen gemäß Gleichungen (4), (5) bestimmt und sind ähnlich den oben beschriebenen.

Infolge der Entfernung der Aufzeichnungsschicht 4 und deren Übertragung auf die zusätzliche Innenfläche 5 bildet sich auf der zusätzlichen Innenfläche 5 ein vorzüglicher Film des Aufzeichnungsmediums 4 aus, der die gleichen physikalisch-chemischen Eigenschaften und die gleiche Dicke hat, wie sie auch der Ausgangsfilm des Aufzeichnungsmediums 4 besitzt. Im weiteren kann die Rolle der wirksamen Innenfläche die Fläche 5 und die Rolle der zusätzlichen Innenfläche die Fläche 3 übernehmen. Die Vorgänge können mehrfach wiederholt werden.

Beispiel 3

In der in Fig. 2 dargestellten Ausführungsform des Informationsaufzeichnungs- und Löschverfahrens für einen optischen Informationsträger bauen die Vorgänge der Auftragung und Entfernung des Aufzeichnungsmediums 4 auf Gasphasenreaktionen unter Beteiligung von Titanjodiden auf. Das Aufzeichnungsmedium 4 stellt einen Titanfilm (Ti) mit Vertiefungen an den Stellen der eventuellen

Unterbringung von Informationseinheiten dar. Die Informationseinheiten werden durch Auftragung einer Aufzeichnungsschicht auf die wirksame Innenfläche 3 im Bereich dieser Vertiefungen erzeugt. Als aktiver, gegenüber dem Stoff des Aufzeichnungsmediums 4 eine chemische Affinität aufweisender Stoff 6 tritt Jod (j) auf. Auf der zusätzlichen Innenfläche 5 liegt ein Titanfilm auf.

Die Auftragung des Stoffes des Aufzeichnungsmediums 4 erfolgt durch Erhitzung der zusätzlichen Innenfläche 5 der hermetisch abgedichteten Kammer 2 des optischen Informationsträgers 1 auf die 110°C gleiche Temperatur der Entfernung des Zwischenstoffes, durch Übertragung des Zwischenstoffes mittels Diffusion und Konvektion zur wirksamen Innenfläche 3 und durch eine energetische Einwirkung auf die Gegend der Vertiefung mit einem fokussierten Laserstrahl. Infolgedessen verläuft auf der zusätzlichen Innenfläche 5 bei einer Temperatur von 110°C eine Reaktion gemäß Gleichung

$$Ti + 4J = TiJ_4 \qquad (6)$$

und auf der wirksamen Innenfläche 3 bei einer Temperatur von ungefähr 1000°C eine Reaktion gemäß Gleichung

$$TiJ_4 = Ti + 4J. \qquad (7)$$

Die Temperatur von 1000°C wird durch eine energetische Einwirkung von $8 \cdot 10^{-9}$ J/$\mu m^2$ auf das Aufzeichnungsmedium 4 im Laufe von 1,3 $\mu s$ erreicht.

Die Eliminierung mindestens einer Informationseinheit wird durch Entfernung des Aufzeichnungsmediums 4 im Bereich dieser Informationseinheit durch eine energetische Einwirkung eines fokussierten Laserstrahls auf die wirksame Innenfläche 3 und durch Erhitzung der zusätzlichen Innenfläche 5, durch Übertragung des Zwischenstoffes $TiJ_2$ zur zusätzlichen Innenfläche 5 und durch Absetzung des Zwischenstoffes $TiJ_2$ auf der zusätzlichen Innenfläche 5 verwirklicht. Die Erwärmungstemperatur der zusätzlichen Innenfläche 5 ist gleich 150°C, die energe-

tische Einwirkung von $6 \cdot 10^{-9} J/\mu m^2$ gewährleistet eine Temperatur von etwa 800°C auf der wirksamen Innenfläche 3 im Laufe der Zeit der Entfernung des Aufzeichnungsmediums 4. Auf der wirksamen Innenfläche 3 der hermetisch abgedichteten Kammer 2 des optischen Informationsträgers 1 läuft eine chemische Reaktion gemäß Gleichung

$$Ti + TiJ_4 = 2TiJ_2 \qquad (8)$$

ab.

Auf der zusätzlichen Innenfläche 5 der hermetisch abgedichteten Kammer 2 des optischen Informationsträgers 1 verläuft eine chemische Reaktion gemäß Gleichung

$$2TiJ_2 = Ti + TiJ_2. \qquad (9)$$

Die Vorgänge der Auftragung und Entfernung des Aufzeichnungsmediums 4 können mehrfach wiederholt werden.

Das erfindungsgemäße Informationsaufzeichnungs- und Löschverfahren für einen optischen Informationsträger und der erfindungsgemäße optische Speicher für dessen Durchführung gestatten es, in einem geschlossenen System des optischen Informationsträgers durch Schaffung von Bedingungen für den Ablauf von reversiblen chemischen Reaktionen unter Beteiligung des Stoffes des Aufzeichnungsmediums eine mehrfache chemische Regenerierung von Abschnitten des Aufzeichnungsmediums des optischen Informationsträgers in den Informationsverarbeitungsvorgängen zu realisieren, was eine Vergrößerung der Zykluszahl bei der Informationsüberschreibung und eine Erhöhung der Zuverlässigkeit der Systeme zur Informationsaufzeichnung und -speicherung sichert.

## Industrielle Anwendbarkeit

Die Erfindung kann in der Rechentechnik, insbesondere bei der Organisierung von Datenbänken, in kleinformatigen Bild- und Schallaufzeichnungsgeräten Anwendung finden.

PATENTANSPRÜCHE

1. Informationsaufzeichnungs- und Löschverfahren für einen optischen Informationsträger, das bei einer relativen Verschiebung des optischen Informationsträgers (1) und einer Strahlungsquelle (7) zueinander durchgeführt wird, die eine energetische Einwirkung auf das Aufzeichnungsmedium (4) des optischen Informationsträgers (1) zur Erzeugung einer Folge von Aufzeichnungsinformationseinheiten und zur Informationslöschung ausübt, darin bestehend, daß die Erzeugung mindestens einer Informationseinheit aus der Folge der Aufzeichnungsinformationseinheiten durch Entfernung einer Aufzeichnungsschicht (4) des optischen Informationsträgers (1) durch eine energetische Einwirkung auf dieses Aufzeichnungsmedium (4) und die Eliminierung mindestens einer Informationseinheit aus der Folge der Aufzeichnungsinformationseinheiten durch Auftragung und/oder Entfernung einer Aufzeichnungsschicht (4) des optischen Informationsträgers (1) unter einer energetischen Einwirkung auf dieses Aufzeichnungsmedium (4) vorgenommen wird, wobei die Entfernung und Auftragung der Aufzeichnungsschicht (4) des optischen Informationsträgers (1) durch Durchführung chemischer Reaktionen unter Beteiligung des Stoffes des Aufzeichnungsmediums (4) und eines aktiven Stoffes (6) realisiert werden, der eine chemische Affinität gegenüber dem Stoff des Aufzeichnungsmediums (4) aufweist, dadurch gekennzeichnet, daß der optische Informationsträger (1) mit einer hermetisch abgedichteten Kammer (2) eingesetzt wird, die eine wirksame Innenfläche (3) mit mindestens einer Aufzeichnungsschicht (4) und eine zusätzliche Innenfläche (5) aufweist, in die hermetisch abgedichtete Kammer (2) des optischen Informationsträgers (1) der aktive, gegenüber dem Stoff des Aufzeichnungsmediums (4) eine chemische Affinität aufweisende Stoff (6) geleitet wird, wobei die Entfernung der Aufzeichnungsschicht (4) im Bereich mindestens einer

Informationseinheit durch Übertragung von Gasphasenprodukten einer chemischen Wechselwirkung des Stoffes des Aufzeichnungsmediums (4) mit dem aktiven, gegenüber dem Stoff des Aufzeichnungsmediums (4) eine chemische Affinität aufweisenden Stoff (6) zur zusätzlichen Innenfläche (5) der hermetisch abgedichteten Kammer (2) des optischen Informationsträgers (1) und durch Absetzung eines im Ergebnis dieser chemischen Wechselwirkung erhaltenen Zwischenstoffes (12) auf der zusätzlichen Innenfläche (5) durch eine energetische Einwirkung auf denjenigen Teil der wirksamen Innenfläche (3) der hermetisch abgedichteten Kammer (2) des optischen Informationsträgers (1) im Bereich mindestens einer Informationseinheit, von dem die Aufzeichnungsschicht (4) entfernt wird, unter Aufwand einer Energie der Entfernung der Aufzeichnungsschicht (4) und durch Erhitzung der zusätzlichen Innenfläche (5) der hermetisch abgedichteten Kammer (2) des optischen Informationsträgers (1) auf die Temperatur der Absetzung des Zwischenstoffes (12) verwirklicht wird, während die Auftragung der Aufzeichnungsschicht (4) im Bereich mindestens einer Informationseinheit durch Übertragung von Gasphasenprodukten einer chemischen Wechselwirkung des Zwischenstoffes (12) mit dem aktiven, gegenüber dem Stoff des Aufzeichnungsmediums (4) eine chemische Affinität aufweisenden Stoff (6) auf einen Teil der wirksamen Innenfläche (3) der hermetisch abgedichteten Kammer (2) des optischen Informationsträgers (1) im Bereich mindestens einer Informationseinheit durch Erhitzung der zusätzlichen Innenfläche (5) der hermetisch abgedichteten Kammer (2) des optischen Informationsträgers (1) auf die Temperatur der Entfernung des Zwischenstoffes (12) und durch eine energetische Einwirkung auf den Teil der wirksamen Innenfläche (3) der hermetisch abgedichteten Kammer (2) des optischen Informationsträgers (1) unter Aufwand einer Energie der Absetzung der Aufzeichnungsschicht (4) auf diesen Teil der wirksamen

Innenfläche (3) realisiert wird.

2. Informationsaufzeichnungs- und Löschverfahren für einen optischen Informationsträger, das bei einer relativen Verschiebung des optischen Informationsträgers (1) und einer Strahlungsquelle (7) gegeneinander zustande kommt, die eine energetische Einwirkung auf das Aufzeichnungsmedium (4) des optischen Informationsträgers (1) zur Erzeugung einer Folge von Aufzeichnungsinformationseinheiten und zur Informationslöschung ausübt, darin bestehend, daß die Erzeugung mindestens einer Informationseinheit aus der Folge der Aufzeichnungsinformationseinheiten durch Auftragung einer Aufzeichnungsschicht (4) des optischen Informationsträgers (1) unter einer energetischen Einwirkung auf dieses Aufzeichnungsmedium (4) und die Eliminierung mindestens einer Informationseinheit aus der Folge der Aufzeichungsinformationseinheiten durch Entfernung einer Aufzeichnungsschicht (4) des optischen Informationsträgers (1) durch eine energetische Einwirkung auf dieses Aufzeichnungsmedium (4) erfolgt, wobei die Entfernung und die Auftragung der Aufzeichnungsschicht (4) des optischen Informationsträgers (1) durch Durchführung chemischer Reaktionen unter Beteiligung des Stoffes des Aufzeichnungsmediums (4) und des aktiven, gegenüber dem Stoff des Aufzeichnungsmediums (4) eine chemische Affinität aufweisenden Stoffes (6) vorgenommen werden, dadurch g e k e n n z e i c h n e t, daß der optische Informationsträger (1) mit einer hermetischen Kammer (2) eingesetzt wird, die eine wirksame Innenfläche (3) mit mindestens einer Aufzeichnungsschicht (4) und eine zusätzliche Innenfläche (5) aufweist, in die hermetisch abgedichtete Kammer (2) des optischen Informationsträgers (1) der aktive, gegenüber dem Stoff des Aufzeichnungsmediums (4) eine chemische Affinität aufweisende Stoff (6) geleitet wird, wobei die Entfernung der Aufzeichnungsschicht (4) im Bereich mindestens einer Informationseinheit durch Übertragung von Gasphasenprodukten einer chemischen Wechselwirkung des Stoffes des Aufzeichnungsmediums (4) mit dem aktiven, gegenüber dem Stoff des Aufzeichnungsmediums (4) eine chemische Affinität aufweisenden Stoff (6) zur zusätzlichen Innenfläche (5) der hermetisch abgedichteten Kammer (2) des optischen Informationsträgers (1) und durch Absetzung eines im Ergebnis dieser chemischen Wechselwirkung erhaltenen Zwischenstoffes (12) auf der zusätzlichen Innenfläche (5) durch eine energetische Einwirkung auf denjenigen Teil der wirksamen Innenfläche (3) der hermetisch abgedichteten Kammer (2) des optischen Informationsträgers (1) im Bereich mindestens einer Informationseinheit, von dem die Aufzeichnungsschicht (4) entfernt wird, unter Aufwand einer Energie der Entfernung der Aufzeichnungsschicht (4) und durch Erhitzung der zusätzlichen Innenfläche (5) der hermetisch abgedichteten Kammer (2) des optischen Informationsträgers (1) auf die Temperatur der Absetzung des Zwischenstoffes (12) verwirklicht wird, während die Auftragung der Aufzeichnungsschicht (4) im Bereich mindestens einer Informationseinheit durch Übertragung von Gasphasenprodukten einer chemischen Wechselwirkung des Zwischenstoffes (12) mit dem aktiven, gegenüber dem Stoff des Aufzeichnungsmediums (4) eine chemische Affinität aufweisenden Stoff (6) auf einen Teil der wirksamen Innenfläche (3) der hermetisch abgedichteten Kammer (2) des optischen Informationsträgers (1) im Bereich mindestens einer Informationseinheit durch Erhitzung der zusätzlichen Innenfläche (5) der hermetisch abgedichteten Kammer (2) des optischen Informationsträgers (1) auf die Temperatur der Entfernung des Zwischenstoffes (12) und durch eine energetische Einwirkung auf den Teil der wirksamen Innenfläche (3) der hermetisch abgedichteten Kammer (2) des optischen Informationsträgers (1) im Bereich mindestens einer Informationseinheit unter Aufwand einer Energie der Absetzung der Aufzeichnungsschicht (4) auf diesen Teil der wirksamen Innenfläche (3) realisiert wird.

3. Informationsaufzeichnungs- und Löschverfahren für einen optischen Informationsträger, das bei einer relativen Verschiebung des optischen Informationsträgers (1) und einer Strahlungsquelle (7) gegeneinander zustande kommt, die eine energetische Einwirkung auf das Aufzeichnungsmedium (4) des optischen Informationsträgers (1) zur Erzeugung einer Folge von Aufzeichnungsinformationseinheiten und zur Informationslöschung ausübt, darin bestehend, daß die Erzeugung mindestens einer Informationseinheit aus der Folge der Aufzeichnungsinformationseinheiten durch Entfernung einer Aufzeichnungsschicht (4) des optischen Informationsträgers (1) durch eine energetische Einwirkung auf dieses Aufzeichnungsmedium (4) und die Eliminierung mindestens einer Informationseinheit aus der Folge der Aufzeichnungsinformationseinheiten durch Entfernung und/oder Auftragung einer Aufzeichnungsschicht (4) des optischen Informationsträgers (1) unter einer energetischen Einwirkung auf dieses Aufzeichnungsmedium (4) vorgenommen wird, dadurch gekennzeichnet, daß der optische Informationsträger (1) mit einer hermetisch abgedichteten Kammer (2) eingesetzt wird, die eine wirksame Innenfläche (3) mit mindestens einer Aufzeichnungsschicht (4) und eine zusätzliche Innenfläche (5) aufweist, in die hermetisch abgedichtete Kammer (2) des optischen Informationsträgers (1) ein aktiver, gegenüber dem Stoff des Aufzeichnungsmediums (4) eine chemische Affinität aufweisender Stoff (6) geleitet wird, wobei die Entfernung der Aufzeichnungsschicht (4) im Bereich mindestens einer Informationseinheit durch eine energetische Einwirkung nur auf denjenigen Teil der wirksamen Innenfläche (3) der hermetisch abgedichteten Kammer (2) des optischen Informationsträgers (1) im Bereich mindestens einer Informationseinheit, von dem die Aufzeichnungsschicht (4)

entfernt wird, unter Aufwand einer Energie der Entfernung der Aufzeichnungsschicht (4) verwirklicht wird, während die Auftragung der Aufzeichnungsschicht (4) im Bereich mindestens einer Informationseinheit durch Übertragung von Gasphasenprodukten einer chemischen Wechselwirkung des aktiven, gegenüber dem Stoff des Aufzeichnungsmediums (4) eine chemische Affinität aufweisenden Stoffes mit einem im Ergebnis einer chemischen Wechselwirkung des Stoffes des Aufzeichnungsmediums (4) mit dem aktiven, gegenüber dem Stoff des Aufzeichnungsmediums (4) eine chemische Affinität aufweisenden Stoff (6) erhaltenen Zwischenstoff (6) auf einen Teil der wirksamen Innenfläche (3) der hermetisch abgedichteten Kammer (2) des optischen Informationsträgers (1) im Bereich mindestens einer Informationseinheit durch Erhitzung der zusätzlichen Innenfläche (5) der hermetisch abgedichteten Kammer (2) des optischen Informationsträgers (1) auf die Temperatur der Entfernung des Zwischenstoffes (12) und durch eine energetische Einwirkung auf den Teil der wirksamen Innenfläche (3) der hermetisch abgedichteten Kammer (2) des optischen Informationsträgers (1) im Bereich mindestens einer Informationseinheit unter Aufwand einer Energie der Absetzung der Aufzeichnungsschicht (4) auf diesen Teil der wirksamen Fläche (3) realisiert wird.

4. Optischer Speicher zur Informationsaufzeichnung und -löschung auf einem optischen Informationsträger, der einen optischen Informationsträger (1) mit einem Aufzeichnungsmedium (4), eine Strahlungsquelle (7) energetischer Einwirkung auf das Aufzeichnungsmedium (4) des optischen Informationsträgers (1) durch Bestrahlung, einen aktiven, gegenüber dem Stoff des Aufzeichnungsmediums (4) eine chemische Affinität aufweisenden Stoff (6), eine mit dem optischen Informationsträger (1) und der Strahlungsquelle (7) verbundene Adressierungseinheit (10) für Aufzeichnungsinformationseinheiten, die eine kontrollierbare relative Verschiebung des optischen Informationsträgers (1) mit dem Aufzeichnungsmedium (4) und der Strahlungsquelle (7) zueinander ausführt, und einen Erhitzer (11) enthält, dadurch gekennzeichnet, daß hier der optische Informationsträger (1) eingesetzt wird, der mit einer hermetisch abgedichteten Kammer (2) versehen ist, die eine in Wärmekontakt mit dem Erhitzer (11) stehende wirksame (3) und zusätzliche Innenfläche (5) besitzt, wobei das Aufzeichnungsmedium (4) in Form mindestens einer Schicht auf der wirksamen Innenfläche (3) der hermetisch abgedichteten Kammer (2) des optischen Informationsträgers (1) aufliegt, die mit dem aktiven, gegenüber dem Stoff des Aufzeichnungsmediums (4) eine chemische Affinität aufweisenden Stoff (6) versehen ist.

0258460

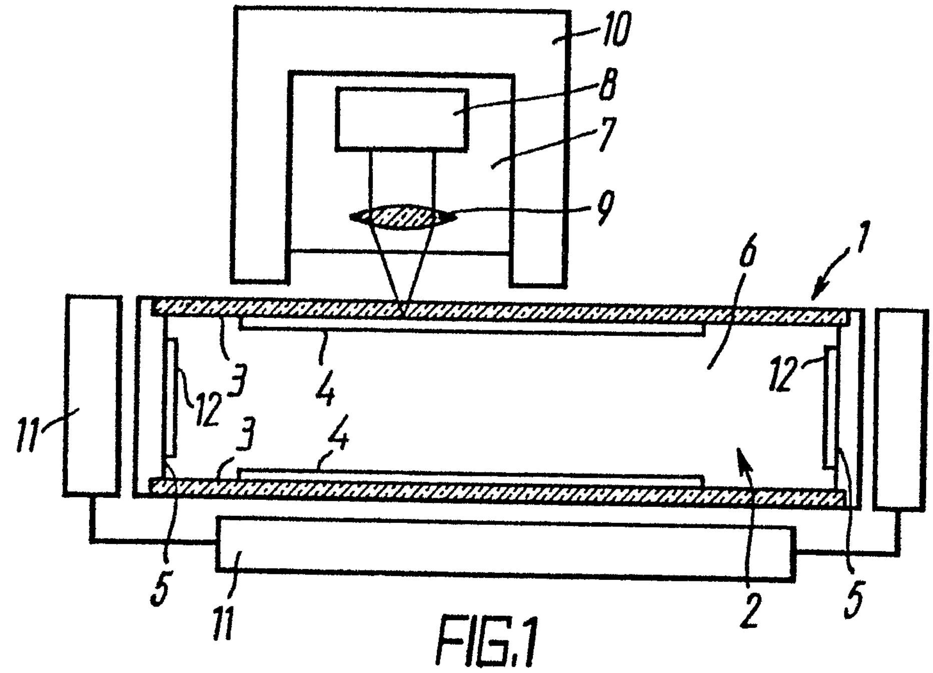


FIG.1

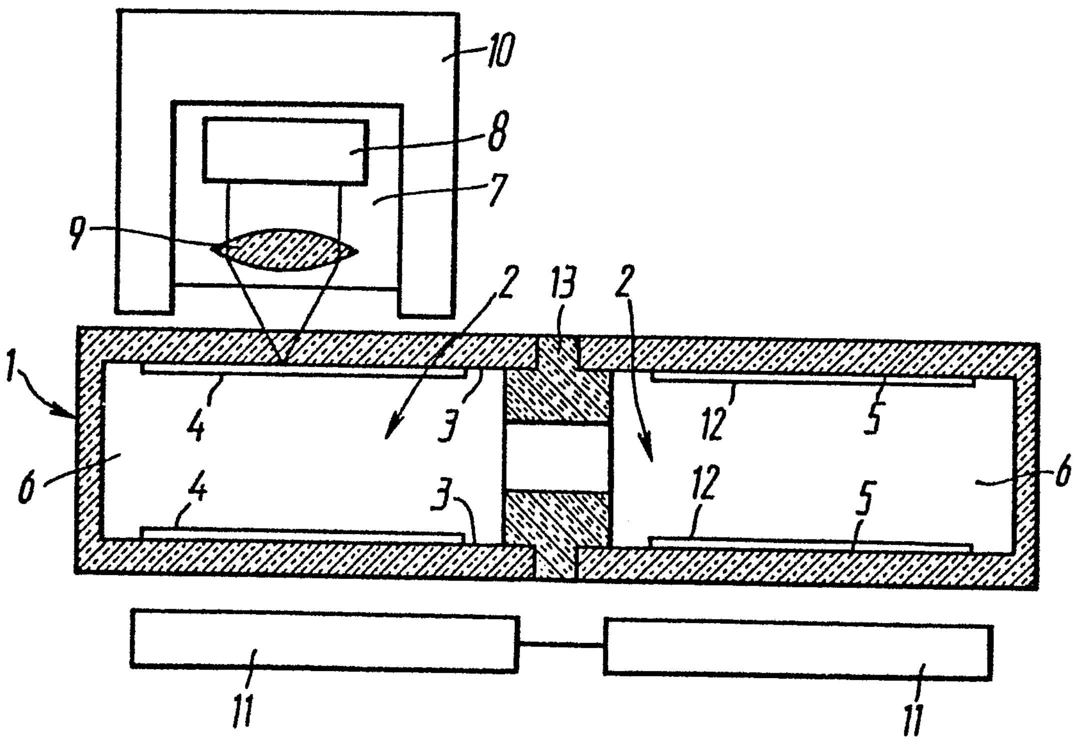


FIG.2

# INTERNATIONAL SEARCH REPORT

0258460

International Application No PCT/SU 87/00018

**I. CLASSIFICATION OF SUBJECT MATTER** (if several classification symbols apply, indicate all) [8]

According to International Patent Classification (IPC) or to both National Classification and IPC

$IPC^4$ - G 11 B 7/00

**II. FIELDS SEARCHED**

Minimum Documentation Searched [7]

| Classification System | Classification Symbols |
|---|---|
| $IPC^4$ | G 11 B 7/00, 7/24 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | US, A, 4403318, (Matsushita Electric Industrial Co. Ltd.),06 September 1983 (06.09.83), see the abstract | 1-4 |
| A | FR, A1, 2521760 (THOMSON-CSF (SA)), 19 August 1983 (19.08.83) see the claims, figure 1 | 1-4 |
| A | DE, A1, 3203599,(Tokyo Shibaura Denki K.K.) 12 August 1982 (12.08.82), see page 6, figure 1 | 1-4 |

--------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 04 May 1987 (04.05.87) | 20 May 1987 (20.05.87) |
| **International Searching Authority** | **Signature of Authorized Officer** |
| ISA/SU | |